Europäisches Patentamt

European Patent Office

Office européen des brevets

(19)

(11) Publication number: **0 145 123**
**A2**

(12) **EUROPEAN PATENT APPLICATION**

(21) Application number: **84305752.2**

(22) Date of filing: **22.08.84**

(51) Int. Cl.⁴: **H 01 G 4/30**

(30) Priority: **21.11.83 US 553563**

(43) Date of publication of application:
**19.06.85 Bulletin 85/25**

(84) Designated Contracting States:
**BE DE FR GB IT NL**

(71) Applicant: **Corning Glass Works**
**Houghton Park**
**Corning New York 14831(US)**

(72) Inventor: **Herczog, Andrew**
**270 West Lake Road P.O. Box 96**
**Hammondsport New York(US)**

(74) Representative: **Kyle, Diana et al,**
**ELKINGTON AND FIFE High Holborn House 52/54 High**
**Holborn**
**London WC1V 6SH(GB)**

(54) **A method of manufacturing a barrier layer capacitor.**

(57) A multi-layer capacitor is formed by producing a sintered ceramic body having cavities extending to opposite faces thereof. The ceramic body may be formed by depositing on sheets of a powdered dielectric ceramic material bonded with a temporary bond, an area of a temporarily bonded powdered ceramic material which on firing forms a cavity, consolidating in a stacked array a plurality of such sheets, and sintering them in a reducing atmosphere. An oxidizing atmosphere is introduced into the interior of the resultant fired multi-layered shell structure to form surface barrier layers at the cavity-forming surfaces. Subsequently, a metallic electrode material is introduced into the cavities to form the capacitor electrodes.

EP 0 145 123 A2

Croydon Printing Company Ltd.

A method of manufacturing a barrier layer capacitor

This invention relates to a method of manufacturing a barrier layer capacitor.

As used herein the term "barrier layer" refers to both surface barrier layers and to grain boundary barrier layers. It is noted that pure surface barrier layers and pure grain boundary barrier layers rarely exist alone; there usually exists a mixture of the two types with a preponderance of one or the other type of insulation layer.

Semiconduction ceramic compositions based on polycrystalline titanates and niobates having barrier layer insulating layers are known for use as capacitor dieletric materials. Operational theories and other pertinent information concerning barrier layers and materials for forming the same may be found in the publication: "Grain Boundary Phenomena in Electronic Ceramics", ed. L. M. Levinson, American Ceramic Society Publication (1981). A review of barrier layer capacitors appears at pages 215 to 231 of that publication.

The development of barrier layer dielectric technology has resulted in the synthesis of ceramic microstructures, some of which have significantly better temperature and frequency characteristics than was previously possible with ferroelectric materials of intrinsically high dielectric constant such as barium titrate. Barrier layer capacitors are usually formed as discs or other suitable shapes which are provided with a simple pair of electrodes. An enormous advantage in volumetric efficiency could be realized by forming barrier layer capacitors as monolithic multi-layer devices. However, for a number of reasons, it has not been possible to make high volume efficiency multi-layer ceramic capacitors using the boundary layer approach.

In barium titanate and strontium titanate boundary layer capacitors, grain sizes have been in the neighbourhood of 40 μm and larger. By contrast, the thickness of a single layer of dielectric material in a multi-layer ceramic capacitor is less than 30 μm. The high effective dielectric constant achieved in grain boundary barrier layer capacitors is directly proportional to the grain size of the material. To ensure the formation of a reliable grain boundary barrier layer multi-layer capacitor, there should be at least about 5 grains in one thickness of the dielectric to allow its use in a 15-50 v. capacitor. The maximum grain size in a surface barrier layer multi-layer capacitor is irrelevant as long as the ceramic material is pore-free.

A multi-layer capacitor of the barrier layer type has to be formed by reoxidation of a thin surface layer exposed to air or oxygen or by preferential oxidation along grain boundaries. Thus, a surface of each dielectric layer must be exposed to an oxidizing atmosphere, and a p-type dopant is used in the ceramic material to have a p-type dielectric layer on the n-type semiconducting ceramic. However, in typical multi-layer ceramic capacitor manufacturing processes, the surfaces of all dielectric layers except the external surfaces are sealed by lamination with the noble metal electrodes so that both counter-doping and reoxidation by exposure to air of the internal dielectric layers is impossible.

One approach to the circumvention of this problem is taught in U.S. Patent No. 4,237,084. A liquid phase sintering agent is employed to insulate the grains of a semiconducting alkaline earth metal titanate. An alkaline earth metal titanate of fine particle size
is calcined with a small amount of hexavalent metal
oxide to produce n-type semiconductivity. This powder
is blended with a small amount of a lead germanate
composition, pressed and fired to produce internal
insulating boundary layers about the grains of the
semiconducting titanate by liquid phase sintering.
The resulting fine-grained ceramic is said to be
suitable for the fabrication of multi-layer capacitors.
However, in a grain boundary barrier layer monolithic
capacitor, electrode interaction effects can effect the
grain conductivity. The publication, H. Schmelz,
Powder Metallurgy International, Vol. 7, No. 4,
1975, pp. 176-177, describes attempts to stack Pd-
or Pt-metallized barrier layer ceramics. The dielectric
constant drops by about one order of magnitude due to
the breakdown of the original grain conductivity as the
result of antidoping caused by the diffusion of
the electrode material into the interior of the grain.
If the interior of the grain is unsulating, the
dielectric constant is then necessarily that of the
basic material.

We have therefore sought to provide a method
of making barrier layer multi-layer capacitors by a
technique which does not suffer the disadvantage
of diffusion of electrode material into the ceramic
material.

We have further sought to provide a method for
the manufacture of a multi-layer capacitor of the
barrier layer type which does not require precious
metal electrodes.

The method of the present invention comprises
forming a sintered body having a granular matrix of
semiconductive ceramic, for example, a titanate of
strontium or barium. The sintered body has a plurality of spaced cavities therein which extend to one of a pair of edge regions of the body, alternate cavities extending to the same edge region. At least a portion of each of these semiconductive grains which forms the surface of the cavities is converted to insulative material to form a barrier layer structure. Thereafter, an electrode metal is introduced into the cavities to form electrodes.

A furface barrier layer structure can be formed by employing a pore-free, high density sintered body. The grains near the surface within the cavities can be converted to insulative material by firing the body for a relatively short period of time in an oxidizing atmosphere. Alternatively, a p-type dopant can be introduced into the cavities, and the body can be heated in an oxidizing atmosphere to diffuse the dopant into the surface grains of the cavity-forming walls.

A relatively permeable sintered body must be employed in order to form a multi-layer capacitor of the grain boundary barrier layer type. A p-type dopant is introduced into the cavities along with a flux which ensures penetration of the dopant into the pores and grain boundaries of the body. The body is heated in an oxidizing atmosphere to diffuse the dopant into the grain boundaries.

A multi-layer capacitor made in accordance with the method of the present invention is resistant to electrode poisoning effects since the steps of reducing and oxidizing the granular ceramic material are performed before electrode metal has been applied to the sintered body. Also, the sintered body is provided with electrodes made of low cost metals in a relatively low temperature operation. The poisoning effect reported in the aforementioned Schmelz publication is partly caused by the high temperature necessary to form the multilayer body.

The invention is llustrated in the following description with reference to the accompanying drawings wherein:

Figure 1 is a fragmentary plan view illustrating a technique for forming a large number of capacitor chips;

Figure 2 is a cross-sectional, side elevational view of the capacitor stack of Figure 1 taken along lines 2-2 thereof;

Figures 3, 4, 5, 7 and 8 illustrate successive steps in a method of making a multi-layer, surface barrier layer capacitor;

Figure 6 is a diagramatic illustration of a single dielectric layer in the chip of Figure 5; and

Figure 9 is a diagramatic illustration of a single dielectric layer in a chip during the formation of a grain boundary barrier layer capacitor.

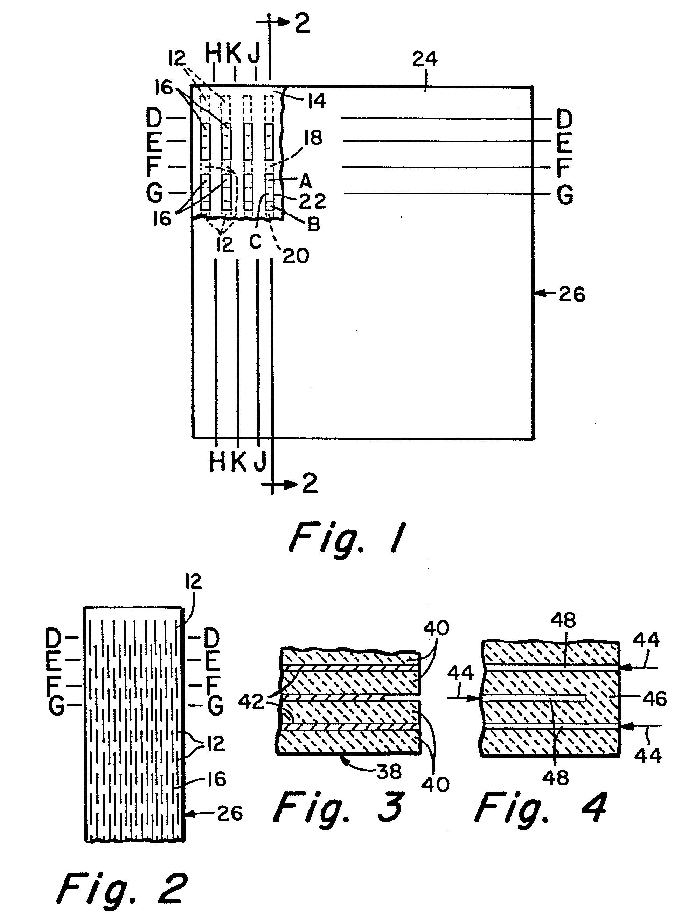

A portion of the method of the present invention is based on conventional capacitor manufacturing technology. Figure 1 illustrates a well known technique by which commercial quantities of capacitor chips can be formed. A plurality of sets of elongated films 12 is first applied to one green dielectric sheet in a suitably spaced and positioned manner. Thereafter a second green dielectric sheet 14 is disposed thereover in register with the green dielectric sheet to which films 12 were applied. A second plurality of elongated films 16 is then applied to green dielectric sheet 14 in such manner that a portion of each of films 16 will overlap a portion of at least one of the plurality of films 12. In particular, films 18 and 20, being two of the plurality of films 12, have been positioned such that film 22, one of the plurality of films 16, can be applied to sheet 14 so as to partly overlap both film 18 and film 20. This is illustrated by rectangles "A" and "B", "A" being the overlapping portion between films 18 and 22 and "B" being the overlapping portion between films 20 and 22. Rectangle "C" is that portion of film 22 which does not overlap any of the plurality of films 12. For reasons given below, films 12 and 16 are referred to as cavity-forming films.

A third green dielectric sheet 24 is then disposed over the plurality of films 16 to provide a cover therefor. As will be readily understood, the plurality of capacitor units formed in accordance with the illustration of Figure 1 may each contain a plurality of cavity-forming films as illustrated in Figure 2. To obtain multiple pairs of cavity-forming films, the process described above in conjunction with Figure 1 is repeated as many times as is necessary to produce the proper electrical characteristics of the capacitor. Accordingly, a third plurality of cavity-forming films would be applied to green dielectric sheet 24 in register with the plurality of films 12 over which a fourth green dielectric sheet would be disposed. To such a fourth green dielectric sheet a fourth plurality of films would be applied in register with plurality of films 16, and so on.

After pressing and, if necessary, heat treating capacitor stack 26, the resultant monolithic structure can be severed by any suitable means known in the art such as a diamond saw or the like. The assembly can be cut along lines D, E, F, G, and so on in one direction and along lines H, K, J, and so on in the direction perpendicular to lines D, E, F, and G. It is seen that by cutting the assembly in this manner a plurality of capacitor units is obtained, each having a cavity-forming film overlapping a portion of a successive cavity-forming film while both such films have non-overlapping portions extending in opposite directions. In addition, the ends of the non-overlapping protions of the films are automatically exposed during cutting while the sides thereof are not exposed and thus remain hermetically sealed within the mass of dielectric material. of course, the cuts along lines H, K, and J must be narrower than the space between the electrodes to achieve hermetic sealing.

The dielectric sheets are preferably formed as a flexible structure by a technique such as that taught in U.S. Patents No. 3,604,082 (McBrayer et al.) and 3,659,990 (Cato et al.). Powdered ceramic raw material is blended with suitable resins, solvents and plasticizers to make a castable mixture. This mixture is cast into the form of large thin sheets which are then dried and cut into sheets of desired size. As described above, the sheets can be stacked and printed, or alternatively, they can be provided with a pattern of cavity-forming films before they are stacked.

The powdered ceramic can consist of any composition known in the art for the formation of barrier layer capacitors. The ceramic formulations generally used consist of barium titanate and/or strontium titanate as the major constituent with varying amounts of one or more alkaline earth oxides and an n-type dopant like a rare earth or niobium oxide, and minor additions of other metallic oxides such as copper and manganese oxides useful for p-doping of the reoxidized region. Examples of suitable compositions can be found in the aforementioned text, "Grain Boundary Phenomena in Electronic Ceramics" as well as in numerous other publications and patents such as U.S. Patents Nos. 3,569,802, 3,426,249 and 4,309,295.

Various techniques are known for obtaining ceramic powder having the proper grain size distribution.

Conventional ball milling techniques can be employed to prepare ceramic powder for use in surface barrier layer capacitors wherein the particle size distribution can include relatively large grains in the 10-20μm range along with relatively small grains which fill in the pores between the larger grains.

Chemical precipation techniques, flame hydrolysis and other well known techniques can be used to form fine grain powder. Such powders are particularly important for manufacturing grain boundary barrier layer capacitors.

In accordance with the teachings of U.S. Patent No. 4,030,004, cavity-forming films 12 and 16 consist of a paste or the like containing a fugitive or heat-removable binder and a powdered ceramic composition which when fired at sintering temperatures will, instead of becoming dense and compact, form a cavity or an open structure, i.e., a structure, a substantial portion of the volume of which is composed of interconnected voids. The cavity-forming films can be formed by screen printing or otherwise applying a paste to the surface of ceramic sheet. U.S. Patent No. 4,030,004 teaches that such a paste may comprise a mixture of ceramic particles, carbon black and a squeegee medium composed of 80 ml pine oil, 14 g acrylic resin and 1.5 g lecithin dispersing agent to which 1.3% (based on the total weight of all other ingredients of the composition) of ethyl cellulose is added to increase the viscosity.

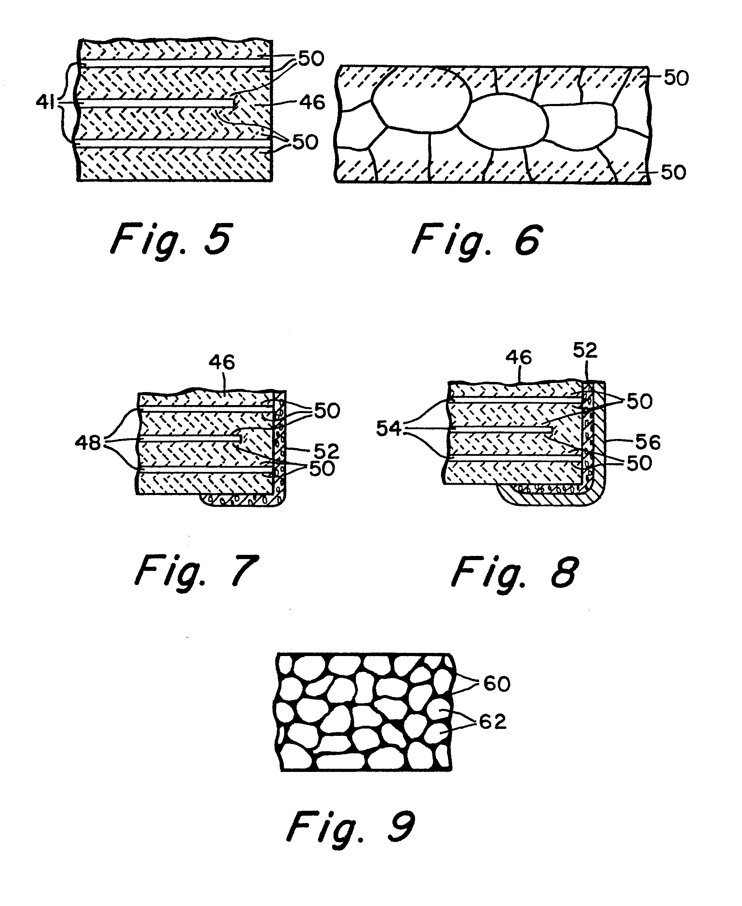

Figure 3 is a fragmentary, cross-sectional view of a capacitor unit or chip cut from stack 26. Chip 38 comprises a plurality of dielectric sheets 40, each of which contains a film 42 which will form a cavity or porous region when fired. Films 42 are applied to the dielectric sheets in predetermined patterns so that each of the severed chips includes alternate strata of screen printed composition that are exposed on opposite ends but are not exposed on the sides of the chips. The chips are heated to drive off and/or decompose the fugitive temporary binding material in the various layers. Burnout of the carbon from films 42 takes place at a temperature of at least 800°C; some traces of carbon usually remain. Final firing of the capacitor chips is carried out in air at a temperature between 1350 and 1460°C. As the ceramic material sinters to a dense body any residual carbon within the cavities is burned to carbon monoxide which may cause reduction of the ceramic body. However, conductivity has to be further enhanced to a value between 0.01 and 10 ohm-cm. To accomplish this, it is convenient to change the firing atmosphere during the final stage of sintering from air to forming gas for 1-3 hours. As shown in Figure 4, each fired chip consists of a ceramic body 46 in which there are situated porous cavities 48. As illustrated by arrows 44, the forming gas as well as other gases and liquids can enter the cavities 48 and react with the ceramic material therein.

The method of the present invention is characterized in that a barrier layer structure is formed within the ceramic body prior to the time that it is provided with electrodes. In a preferred embodiment, a surface barrier layer type multi-layer structure is formed. The grain size limitation is not as stringent for this type of dielectric structure. The pore-free structure needed for this type of capacitor can be obtained by a number of techniques. There can be employed a two phase material comprising a ceramic phase having a grain size in the range of 10 to 20µm, for example, and a glassy phase such as silica which fills in the pores between the large ceramic grains. Another two phase system comprises a single ceramic material having large grains in the range of 10 to 20µm and small grains that fill the pores between the larger grains. Finally, a relative pore-free structure can be formed by starting with a single phase ceramic material made up of very fine particles, i.e. particles in the range of 0.05 to 0.5µm. A body of such fine particles will sinter to a high density, pore-free structure.

A particularly suitable composition for forming a multi-layer capacitor of the surface barrier type consists of 55.9-56.5 wt. % SrO, 43.1-43.6 wt. % $TiO_2$, 0.3-0.7 wt. % $Nb_2O_5$ and 0.05-0.5 wt. % $V_2O_5$. The initially-formed material can be ball milled, calcined at 1100°C-1250°C and then used to form the castable slip from which films 14 and 24 are formed.

Referring again to Figure 4, a surface barrier layer structure can be formed by simply oxidizing the surfaces of the cavity-forming walls of body 46. This can be accomplished by firing body 46 in a suitable oxidizing atmosphere such as air or oxygen for a few minutes at a temperature between 800-1300°C and preferably between 1100-1300°C. As stated previously, a dense, relatively pore-free ceramic structure should be employed in order to ensure the formation of thin oxidized films of high dielectric strength by diffusion of oxygen in the ceramic body. It is convenient to perform the oxidation step immediately after the high temperature sintering operation. Thus, at the end of the step wherein the chip is fired at about 1400°C in forming gas, the temperature is lowered to 800-1300°C and air or oxygen firing is resumed to form an oxidized barrier of 5-10µm thickness, depending upon the desired voltage rating and RC product. It is noted that final oxidation for surface barrier formation is obtained at lower a temperature than that which would be required for the formation of grain boundary barriers.

As shown in Figure 5, all of the surfaces of cavities 48 are provided with an oxidized layer 50. The granular ceramic material of a single layer might appear as illustrated in Figure 6. Because of the pore-free nature of the structure, oxidized layer 50 is essentially limited to the surfaces of the grains adjacent the cavities.

A surface barrier layer device can also be formed by impregnation cavities 48 with a counter dopant such as $Bi_2O_3$, $CuO$, $MnO_2$, or the like. To introduce $Bi_2O_3$, for example, into cavities 48, the chip can be immersed in a bismuth acetate solution which can be formed by adding the desired amount of bismuth acetate to a 50:50 (by volume) acetic acid-water solution. Penetration of the solution into the cavities can be facilitated by placing the chip in a vacuum, and then immersing it in the solution which is maintained at atmospheric pressure. Firing the chip at a temperature in the range of 1100 - 1300°C causes the $Bi_2O_3$ to diffuse into the grains at the cavity-forming surfaces, thereby forming surface barrier layers in each cavity.

After the chip has been treated to form the surface barrier layers at each cavity-forming surface, cavities 48 are provided with the electrode material.

This can be done in the manner disclosed in the aforementioned Rutt patents. For example, the chips of Figure 5 may be immersed in silver nitrate in a vessel in which the pressure is reduced and then restored to normal, thereby causing the infiltration of silver nitrate into the cavities 48. The chips are then heated in air to a temperature between 700°C and 840°C to decompose the silver nitrate and produce a deposit of silver in the cavities. Alternatively, the chips may be placed in a bath of molten metal in a vessel wherein the pressure is reduced to evacuate the cavities. The pressure is then raised to force the molten metal into the cavities 48.

In accordance with the teachings of the aforementioned U.S. Patent No. 4,030,004, the molten impregnating metal may consist of lead, aluminum, copper, zinc, tin and cadmium and alloys containing one or more of these metals. Examples of alloys that can be used are 50% Bi, 25% Pb, 12.5% Sn and 12.5% cd; 25% Pb, 10% Sn, 63% Bi and 2% In; 95% Zn, 4% Al and 1% Cu; 72% Ag and 28% Cu, and various brasses and bronzes. A particularly suitable alloy for forming chip capacitors is 1.5% Ag, 93.5% Pb and 5% Sn.

Prior to introducing conductive material into cavities 48, a coating 52 of porous conductive material may be applied to each end of the chip to which cavities 48 extend as shown in Figure 7. Coating 52 must be a conductive material which will adhere to the ceramic chip, be porous to permit impregnation of cavities 48 therethrough, and allow wetting of the impregnation alloy. Coating 52 may be formed of such materials as silver, gold, palladium and mixtures thereof. As taught in the aforementioned U.S. Patent No. 4,030,004, porous end termination electrodes can be applied to a chip by coating the end faces thereof on which the cavities are exposed with a commercial palladium-silver electroding paste and firing the coated chip at about 880°C for about 1 hour. A suitable conductive end termination could also be applied to the aforementioned chip end faces by sputtering a metal thereon.

The chip illustrated in Figure 7 can then be immersed in a pool of molten impregnating metal as taught in the aforementioned Rutt patents. As shown in Figure 8, the impregnating metal penetrates porous coating 52 and fills cavities 48 to form conductive electrodes 54. Also, a sufficient amount of the molten metal may be allowed to remain on the surface of porous coating 50 to form a coating 56. The resultant capacitor chip can be soldered directly to a substrate, or it can be provided with a pair of wire leads for electrically connecting it to a circuit.

It should also be possible to form multi-layer capacitors of the grain boundary barrier layer type by the method of the present invention. A permeable ceramic structure is needed for the formation of this type of capacitor. The term "permeable" is intended to cover both an open pore ceramic structure as well as a two phase structure, both of which facilitate the diffusion of the donor dopant throughout the granular structure. For an open pore structure, the grains should be as large as possible, but because of the small thickness of a single dielectric layer in a multi-layer capacitor, there should be about five to ten grains in one layer to ensure reasonable breakdown strength. Furthermore, effective dielectric constant in a grain boundary barrier layer structure decreases with grain size. Thus, the grain size is preferably in the range of about 3-5μm for a multi-layer capacitor of the grain boundary barrier layer type. This grain size range is not intended to be limiting; larger grains could be tolerated by increasing the thickness of the dielectric layer. Smaller grains could be employed, but porosity and dielectric constant would be correspondingly reduced.

A composition suitable for forming an open pore ceramic structure is: 55.9-56.5 wt. % SrO, 43.1-43.6 wt. % $TiO_2$ and 0.3-0.7 wt. % $Nb_2O_5$. It is preferred that a method such as chemical precipitation be employed to make the fine grain size needed to form a suitably porous structure.

A composition suitable for forming a liquid phase sintered grain boundary barrier layer structure is: 55.5-55.9 wt. % SrO, 43.6-44.0 wt. % $TiO_2$, 0.3-0.7 wt. % $Nb_2O_5$ and 0.1-0.5 wt. % of one or more of $Cr_2O_3$, $Fe_2O_3$, CuO or $MnO_2$. Another composition which could be employed to form a strontium titanate ceramic body having liquid phase sintered grain boundary barrier layers is: 53.5-55.0 wt. % SrO, 41.5-43.0 wt. % $TiO_2$, 0.3-0.7 wt. % $Nb_2O_5$, 0.5-2.0 wt. % $Al_2O_3$, 0.5-2.0 wt. % $SiO_2$ and 0.1-0.5 % of one or more of $Cr_2O_3$, $Fe_2O_3$, CuO or $MnO_2$.

To obtain diffusion of the p-type dopant throughout the pores or grain boundaries of the ceramic body, the dopant is conventionally contained in a solution which also includes a flux. For example, ceramic body 46 of Figure 4 could be immersed in an aqueous solution of lead acetate, bismuth acetate and boric oxide. As mentioned previously, the chip can initially be placed in a vacuum to facilitate the penetration of the dopant throughout the pores. The chip is heated to diffuse $Bi_2O_3$ into the grain boundaries and thereafter reoxidized in air.

The above-described method is advantageous in that cavities 48 of Figure 4 allow the diffusion of oxygen and p-type dopants into the interior of the ceramic structure in order to facilitate the formation of a grain boundary barrier layer structure. A single layer of such structure is diagramatically illustrated in Figure 9 wherein the heavy black lines 60 represent the grain boundaries between grains 62. Since electrode material is not present during the high temperature reducing and subsequent reoxidation operations, migration of electrode material and consequent poisoning of the semiconductor grains during these operations is avoided.

After a grain boundary barrier layer structure has been formed, the electrodes can be introduced as described above in conjunction with Figure 7 and 8.

CLAIMS

1.    A method of manufacturing a multi-layer barrier
layer capacitor which comprises:-

        forming a sintered ceramic body having a granular
        matrix of semiconductive ceramic composition
        and having a plurality of spaced cavities therein
        which extend to one of a pair of edge regions
        of the body, alternate cavities extending to the
        same edge region,
        converting at least a portion each of those semiconductive grains which form the surfaces of the
        cavities to insulative material to form a barrier
        layer structure, and thereafter
        introducing an electrode metal into the cavities.

2.    A method according to claim 1, wherein the
step of forming a sintered ceramic body comprises
forming a body having a dense, relatively pore-free
structure, and wherein the step of converting comprises
introducing an oxidizing atmosphere into the cavities
and heating the body at a temperature sufficiently
high to oxidize at least the surface portions of those
grains near the surfaces of the cavities.

3.    A method in accordance with claim 1, wherein the
step of forming said sintered ceramic body comprises
forming a body having a dense, relatively pore-free
structure, and wherein the step of converting comprises
introducing into said cavities a p-type dopant and
heating the body in an oxidizing atmosphere to a
temperature sufficiently high to diffuse the dopant
into at least those grains that form the surfaces of
said cavities.

4.    A method according to claim 1, wherein the step
of forming a sintered ceramic body comprises forming
a body having a permeable structure and wherein the step of converting comprises introducing into the cavities and into the grain boundaries of the body a p-type dopant along with a flux which ensures the penetration of the dopant throughout the grain boundaries of the body, and heating the body in an oxidizing atmosphere to a temperature sufficiently high to diffuse the dopant into said grain boundaries.

5. A method according to any of claims 1 to 4, wherein the ceramic composition is selected from the group consisting of barium titanate and strontium titanate, the composition containing a sufficient amount of an n-type dopant to render it semiconductive.

6. A method of forming a multi-layer barrier layer capacitor comprising

provising a plurality of thin sheets of finely divided ceramic dielectric composition bonded with a fugitive bond, the composition forming a dense layer when fired at sintering temperature, superposing a plurality of the thin sheets and providing between each superposed pair of sheets films of a second ceramic composition bond with a fugitive bond, the second composition developing a cavity when fired at the sintering temperature, the layers being so arranged that alternate films extend to one of two different edge portions of the thin sheets while being spaced from the other edge portions thereof,

forming a bonded, self-sustaining body from the stack of superposed sheets,

heating the self-sustaining body to eliminate said fugitive bonds,

firing the self-sustaining body at sintering temperature to produce a monolithic body having strata of a dense semiconductive ceramic composition having cavities therebetween,

converting at least the surface portions the semiconductive grains at the cavity-forming surfaces to insulating material to form a barrier layer structure, and thereafter introducing an electrode metal into the cavities.

7. A method according to claim 6, wherein the films of a second ceramic composition comprise particulate carbon and wherein the step of firing comprises heating the self-sustaining body at sintering temperature in oxygen to oxidize the carbon particles and form a gas which begins to convert the ceramic material to semiconductive material and thereafter heating the body at sintering temperature in a reducing atmosphere to further enhance the semiconductivity of the ceramic material.

8. A method according to claim 7, wherein the step of firing produces a relatively pore-free structure, and the step of converting comprises lowering the temperature of the body from sintering temperature to a temperature between 900 and 1000°C and subjecting the body to an oxidizing atmosphere.

9. A method according to claim 7, wherein the step of firing produces a relatively pore-free structure and wherein the step of converting comprises introducing into the cavities a p-type dopant and heating the body in an oxidizing atmosphere to a temperature sufficiently high to diffuse the dopant into at least those grains that form the surfaces of the cavities.

10. A method according to claim 7, wherein the step of firing produces a sintered ceramic body having a permeable structure and wherein the step of converting comprises introducing into the cavities and into the grain boundaries of the body a p-type dopant along with a flux which ensures that the penetration of the dopant throughout the grain boundaries of the body,

0145123

and heating the body in an oxidizing atmosphere to a temperature sufficiently high to diffuse the dopant into the grain boundaries.

0145123

1 / 2

Fig. 1

Fig. 2

Fig. 3

Fig. 4

Fig. 5

Fig. 6

Fig. 7

Fig. 8

Fig. 9